(19)

Europäisches Patentamt
European Patent Office
Office européen des brevets

(11) EP 1 824 665 B1

(12) **EUROPEAN PATENT SPECIFICATION**

(45) Date of publication and mention
of the grant of the patent:
**08.01.2014 Bulletin 2014/02**

(21) Application number: **05823461.8**

(22) Date of filing: **16.11.2005**

(51) Int Cl.:
**B29D 30/06** (2006.01)

(86) International application number:
**PCT/US2005/041560**

(87) International publication number:
**WO 2006/055649 (26.05.2006 Gazette 2006/21)**

(54) **TIRE MANUFACTURING METHOD FOR IMPROVING THE UNIFORMITY OF A TIRE**

REIFENHERSTELLUNGSVERFAHREN ZUR VERBESSERUNG DER GLEICHFÖRMIGKEIT EINES REIFENS

PROCEDE DE FABRICATION DE PNEU PERMETTANT D'AMELIORER L'UNIFORMITE D'UN PNEU

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.11.2004 PCT/US2004/039021**

(43) Date of publication of application:
**29.08.2007 Bulletin 2007/35**

(73) Proprietors:
• **Compagnie Générale des Etablissements Michelin**
**63000 Clermont-Ferrand (FR)**
• **Michelin Recherche et Technique S.A.**
**1763 Granges-Paccot (CH)**

(72) Inventors:
• **MAWBY, William, David**
**Greenville, SC 29605 (US)**
• **PERSYN, Eugene, Marshall**
**COMFORT, Texas 78013 (US)**
• **TRAYLOR, James, Michael**
**Greer, SC 29650 (US)**

(74) Representative: **Neugebauer, Jürgen et al**
**Casalonga & Partners**
**Bayerstrasse 71-73**
**80335 München (DE)**

(56) References cited:
**EP-A- 0 940 665          EP-A- 1 247 639**
**WO-A-2005/051638      US-A- 5 396 438**
**US-A1- 2003 149 542   US-A1- 2004 020 583**

**Description**

BACKGROUND OF THE INVENTION

The present invention generally relates to a manufacturing method for tires, more specifically a method for improving the uniformity of a tire by reducing the green (uncured) tire radial runout In a tire, and more precisely, a radial tire, the green tire radial runout (RRO) can be effected by many variables introduced from the process of assembly of the green tire. When the radial runout in a tire exceeds acceptable limits, the result may be unwanted vibrations affecting the ride and handling of the vehicle. For these reasons, tire manufacturers strive to minimize the level of radial runout in the tires delivered to their customers.

The present invention relates to a method for reducing before cure radial run out in a tire according to the preamble of claim 1, such as it is known from US2003/149542A1, EP1247639A or EP0940665A.

A well-known and commonly practiced method to improve the radial runout is to grind the tread surface of the tire in the zones corresponding to excess tread. This method is effective, but has the drawback of creating an undesirable surface appearance and of removing wearable tread rubber from the product In addition, this method requires an extra manufacturing step and uses expensive equipment Another approach is disclosed in U.S. Patent 5,882,452 where the before cure radial runout of the tire is measured, followed by a process of clamping and reshaping the uncured tire to a more circular form.

Still another approach to a manufacturing method for improved uniformity involves a method where the factors relating to tire building and tire curing that contribute to after cure RRO or Radial Force Variation (RFV) are offset relative to a measured before cure RRO. An example of a typical method is given in Japanese Patent Application JP-1-145135. In these methods a sample group of tires, usually four, are placed in a given curing mold with each tire rotated an equal angular increment The angular increment is measured between a reference location on the tire, such as a product joint, relative to a fixed location on the curing mold. Next, the tires are vulcanized and their composite RFV waveforms recorded. The term "composite waveform" means the raw waveform as recorded from the measuring device. The waveforms are then averaged by superposition of each of the recorded waveforms upon the others. Superposition is a point by point averaging of the recorded waveforms accomplished by overlaying the measured composite waveform from each tire. The effects of the vulcanization are assumed to cancel, leaving only a "formation" factor related to the building of the tire. In like manner, another set of sample tires is vulcanized in a curing mold and their respective RFV waveforms are obtained. The respective waveforms are again averaged by superposition, this time with the staring points of the waveforms offset by the respective angular increments for each tire. In this manner, the effects of tire building are assumed to cancel, leaving only a "vulcanization factor." Finally, the average waveforms corresponding to the formation factor and the vulcanization factor are superimposed. The superimposed waveforms are offset relative to each other in an attempt to align the respective maximum of one waveform with the minimum of the other waveform. The angular offset thus determined is then transposed to the curing mold. When uncured tires arrive at the mold, each tire is then placed in the mold at the predetermined offset angle. In this manner, the formation and vulcanization contributions to after cure RFV are said to be minimized. A major drawback to this method is its assumption that the formation and vulcanization contributions to after cure RFV are equivalent for each tire. In particular, the factors contributing to the formation factor can vary considerably during a manufacturing run. In fact, these methods contain contradictory assumptions. The methodology used to determine the vulcanization factor relies on an assumption that the step of rotation of the tires in the curing mold cancels the tire building (or formation) effects. This assumption is valid only when the contribution of before cure RRO is consistent from one tire to the next tire, without random contributions. If this assumption is true, then the subsequent method for determination of the formation factor will produce a trivial result.

Further improvements have been proposed in Japanese Patent Application JP-6-182903 and in United States Patent 6,514,441. In these references, methods similar to those discussed above are used to determine formation and vulcanization factor waveforms. However, these methods add to these factors an approximate contribution of the before cure RRO to the after cure RFV. The two methods treat the measured before cure RRO somewhat differently. In the method disclosed in reference JP-6-198203 optimizes RRO effects whereas the method disclosed in US 6,514,441 estimates RFV effects by application of a constant stiffness scaling factor to the RRO waveform to estimate an effective RFV. Both these methods continue to rely on the previously described process of overlapping or superpositioning of the respective waveforms in an attempt to optimize after cure RFV.

WO2005051638 dislcoses a tire manufacturing method which includes a method for optimizing the uniformity of a tire by reducing the after cure radial force variation. The after cure radial force variation vector is modeled as a vector sum of each of the vectors representing contributions arising from the tire building steps - the "tire room effect vector" and a vector representing contributions arising from the vulcanization and uniformity measurement steps - the "curing room effect vector." In further detail, both the tire room and curing room effect vectors can be further decomposed into sub-vectors representing each radial force variation contribution for which a measurable indicator is available. For a series of tires, the method obtains such measurements as the before cure radial runout (RRO) at one or more stages of the building sequence, measurements of loading angles on the tire building equipment, and measurements made during vulcanization process.

US5396438 discloses a method of manufacturing tires comprising the steps of: constructing a sample set of tires; measuring at least two parameters of each tire of the sample to obtain first and second measurement data; measuring force variations of each tire of the sample set during a rotation test at a select rotation rate to obtain force variation data; determining transfer functions between the first and second measurement data and the force variation data; constructing a set of production tires; measuring the two parameters of the production tires; predicting force variations of the production tires at the select rotation rate based on the transfer functions and the two measured parameters of the production tires; responsive to the predicted force variations, comparing the production tires to predetermined criteria; and controlling manufacture of the tires responsive to the comparison. US2004020583 discloses a method for controlling uniformity in tire manufacturing which includes the steps of building at least one tire according to a series of process steps, measuring vector quantities for a uniformity characteristic at high speed and uniformity characteristics at low speed, determining a phase angle relationship for the vector quantities for the uniformity characteristics at low speed that results in a selected vector quantity for the uniformity characteristic at high speed, and modifying at least one process step so that a vector quantity for at least one of the uniformity characteristics at low speed is adjusted toward the phase angle relationship, wherein a modified series of process steps results, and, building at least one additional tire according to the modified series of process steps.

The most important shortcoming of all the above methods is their reliance of superpositioning or overlapping of the respective waveforms. It is well known in the tire industry that the vehicle response to non-uniformity of RRO is more significant in the lower order harmonics, for example harmonics one through five. Since, the above methods use composite waveforms including all harmonics, these methods fail to optimize the RRO harmonics to which the vehicle is most sensitive. In addition, a method that attempts to optimize uniformity using the composite waveforms can be shown, in some instances, to produce RRO that actually increases the contribution of the important lower order harmonics. In this instance, the tire can cause more vehicle vibration problems than if the process were not optimized at all. Therefore, a manufacturing method that can optimize specific harmonics and that is free of the aforementioned assumptions for determining the effects of tire formation and tire vulcanization would be capable of producing tires of consistently improved uniformity. United States Patent 6,856,929 applies a similar approach to solving RFV non-uniformity.

It is therefore an object of the present invention to provide a tire manufacturing method that can effectively reduce the before cure radial runout (RRO) of each tire produced.

SUMMARY OF THE INVENTION

This object is achieved by a method according to independent claim 1. The dependent claims relate to advantageous embodiments.

In view of the above background, the present invention provides a tire manufacturing method that can effectively reduce the before cure radial radial runout (RRO) of each tire produced. The method of the present invention operates to independently optimize each harmonic of RRO. A composite RRO signal, such as those described above, is a scalar quantity that is the variation of the tire's radial runout at each angular position around the tire. When this composite is decomposed into its respective harmonic components, each harmonic of RRO can be expressed in polar coordinates as a before cure RRO vector. This vector has a magnitude equal to the peak-to-peak magnitude of the distance variation of the respective harmonic and an azimuth equal to the angular difference between the measuring reference point and the point of maximum RRO.

The invention provides a method for improving the uniformity of a tire comprising: gathering data to build a model of radial runout of a tire, and comprising the sub-step of extracting at least one harmonic of radial runout of said tire; deriving a vector equation as a sum of vectors corresponding to the contributors to green-tire radial runout; determining a set of vector coefficients from the vector equation; building said tire with a predetermined level of green tire radial runout; and applying the said vector equation and vector coefficients to future tires.

The invention further provides wherein the step of gathering data to build the model comprises: recording a carcass building drum identification; building a tire carcass; recording an angle at which the carcass is loaded onto said building drum; inflating the tire carcass and measuring radial runout measurements of the carcass; recording identification for a summit building drum; recording an angle at which the summit is loaded onto said summit building drum; building a tire summit; obtaining a radial runout measurement of the tire summit; recording a transfer ring identification; transferring the summit from said summit building drum onto the inflated tire carcass; recording a transfer ring angle; and obtaining green tire radial runout measurements.

The method of the present invention provides a significant improvement over previous methods by employing a vectorial representation of the several factors that contribute to the measured before cure RRO for a tire produced by a given process. The before cure RRO vector is modeled as a vector sum of each of the vectors representing RRO contributions arising from the tire building steps - the "tire room effect vector." For a series of tires, the method obtains such measurements as the before cure radial runout (RRO) at one or more stages of the building sequence and measurements of loading angles on the tire building tools and products.

The present invention further improves on previously described methods since it does not rely on manipulation of the measured, composite RRO waveforms to estimate the tire room effects and does not rely on any of the previously described assumptions. The present invention uses the aforementioned measured data as input to a single analysis step. Thus, the coefficients of all the sub-vectors are simultaneously determined. Once these coefficients are known, the tire room effect vector is easily calculated. In summary, the first step of the method comprises gathering data, including carcass radial runout, summit radial runout and green tire radial runout in order to model at least one harmonic of radial runout of the tire; deriving a vector equation as a sum of vectors corresponding to the contributors to green-tire radial runout; determining a set of vector coefficients from the vector equation; and minimizing radial runout, or alternatively building intentionally out of round tires, by applying the gathered data to future tires.

The method of the invention has an additional advantage owing to its simultaneous determination of the sub-vectors. Unlike previous methods, the method of the invention does not require any precise angular increments of the loading positions to determine the sub-vectors. This opens the possibility to continuously update the sub-vector coefficients using the measured data obtained during the production runs. Thus, the method will take into account production variables that arise during a high volume production run.

BRIEF DESCRIPTION OF THE DRAWINGS

The invention will be better understood by means of the drawings accompanying the description, illustrating a non-limitative example of the execution of the tire manufacturing method for improving the uniformity of a tire according to the invention.

Fig. 1 is a schematic representation of a tire manufacturing process equipped to practice the method of the invention

Figs. 2A-2C depict schematic representations of radial runout of the tire showing the original composite waveform as well as several harmonic components.

Fig. 3 is a vector polar plot showing the various contributors to green tire radial runout and the resulting radial runout.

Fig. 4 is a vector polar plot showing the various contributors to green tire radial runout and the resulting radial runout after optimization.

Fig. 5 is a vector polar plot showing the estimated summit radial runout vector as the difference between the green tire radial runout vector and the carcass radial runout vector.

Fig. 6 is a vector polar plot showing the two groupings of vector contributors as well as the resulting radial runout.

Fig. 7 is a vector polar plot showing the two groupings of vector contributors as well as the resulting radial runout after optimization.

DETAILED DESCRIPTION

Reference will now be made in detail to exemplary versions of the invention, one or more versions of which are illustrated in the drawings. Each described example is provided as an explanation of the invention, and not meant as a limitation of the invention. Throughout the description, features illustrated or described as part of one version may be usable with another version. Features that are common to all or some versions are described using similar reference numerals as further depicted in the figures.

Modern pneumatic tires are generally manufactured with great care and precision. The tire designer's goal is that the finished tire is free of non-uniformity in either the circumferential or lateral directions. However, the designer's good intentions notwithstanding, the multitude of steps in the tire manufacturing process can introduce a variety of non-uniformities. An obvious non-uniformity is that the tire may not be perfectly circular (radial runout or RRO). Another form of non-uniformity is radial force variation (RFV). Consider a tire mounted on a freely rotating hub that has been deflected a given distance and rolls on a flat surface. A certain radial force reacting on the flat surface that is a function of the design of the tire can be measured by a variety of known means. This radial force is, on average, equal to the applied load on the tire. However, as the tire rolls, that radial force will vary slightly due to variations in the internal tire geometry that lead to variations in the local radial stiffness of the tire. These variations may be caused on the green tire by localized conditions such as product joints used in the manufacture of the green tire, inaccurate placement of certain products.

The process of curing the tire may introduce additional factors due to the curing presses or slippage of products during curing.

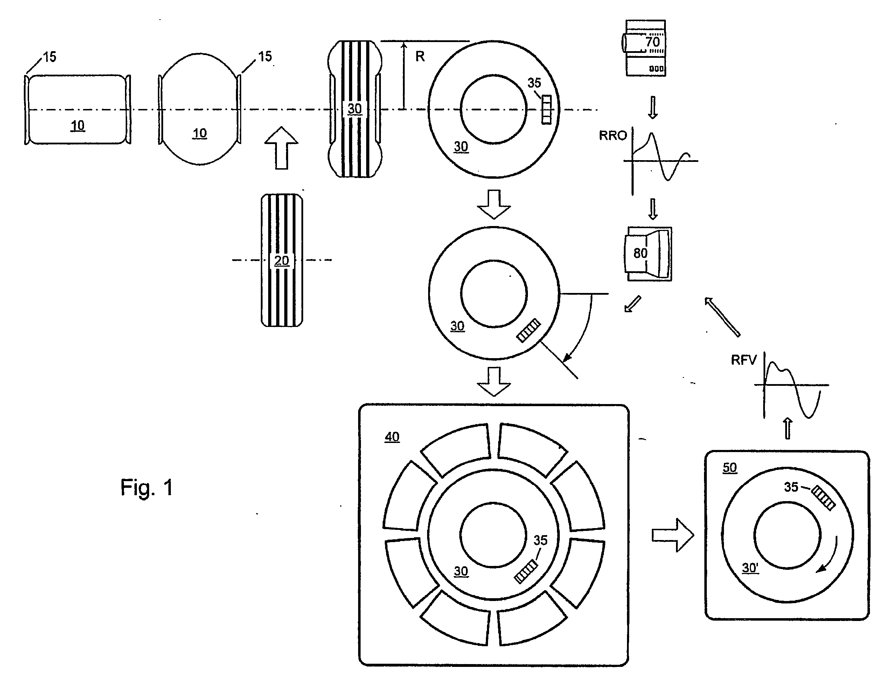

Figure 1 shows a simplified depiction of the tire manufacturing process. A tire carcass 10 is formed on a building drum 15. In a unistage manufacturing process, the carcass 10 remains on the drum 15. In a two-stage process, the carcass 10 would be removed from the drum 15 and moved to a second stage finishing drum. In either case, the carcass 10 is inflated to receive a finished tread band 20 to produce the finished green tire 30. In one variation of the invention, the RRO of the green tire 30 is measured by a measurement system 70 using a barcode 35 as a reference point The RRO waveform is stored, here in a computer 80. The green tire 30 is moved to the curing room where the orientation angle of the tire CAV_REF is recorded. The tire is then loaded into a curing cavity 40 and cured. The cured tire 30' is moved to a uniformity measurement machine 50 for measurement and recording of the tire RFV.

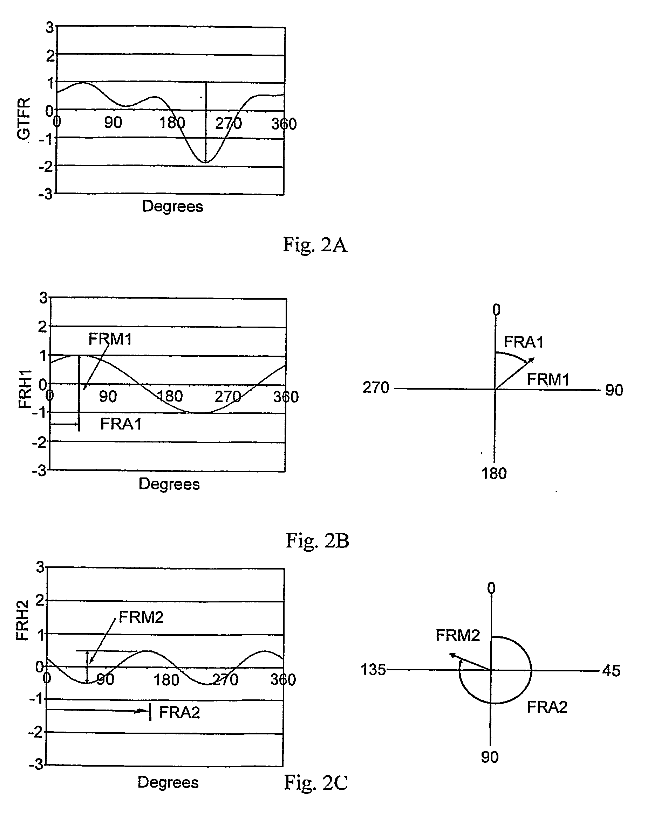

Figure 2A shows a schematic of the measured RRO for a green tire 30. The abscissa represents the circumference of the tire and the ordinate the radial runout variations. Figure 2A is the as-measured signal and is referred to as a composite waveform. The composite waveform may comprise an infinite series of harmonics. The individual harmonics may be obtained by applying Fourier decomposition to the composite signal. Figures 2B and 2C depict the resulting first and second harmonics, respectively, extracted form the composite signal. The magnitude of the first harmonic of radial runout FRM1 is defined as the difference between the maximum and minimum distances. The phase angle or azimuth of the first harmonic FRA1 is defined as the angular offset between the reference location for the measurement and the location of maximum radial distance. Thus, the sine wave depicted by Cartesian coordinates in Fig. 2B can be equally shown as a vector in a polar coordinate scheme. Such a vector polar plot is shown in Fig. 2C immediately to the right of the sine wave plot. The RRO vector of the first harmonic FRH1 has a length equal to FRM1 and is rotated to an angle equal to the azimuth FRA1. In a similar manner, one can extract the second harmonic vector FRH2 shown in Fig. 1C that has a force magnitude FRM2 and an azimuth FRA2. The corresponding polar plot for the H2 vector resembles the H1 vector, except that the angular coordinate is now two times the azimuth angle.

In the description of an example of the method that follows, the particular example is confined to the optimization of the first harmonic H1. However, it is within the scope of the present invention to apply the method to optimize a different harmonic such as H2, H3, etc. Likewise, the following example describes the optimization of radial runout, whereas it is within the scope of the invention to apply the method to the correction of other uniformity characteristics such as radial force variation or lateral force variation. In brief, the method may be used to optimize the harmonics of any measurable uniformity characteristic with suitable modifications to the vector equations described below.

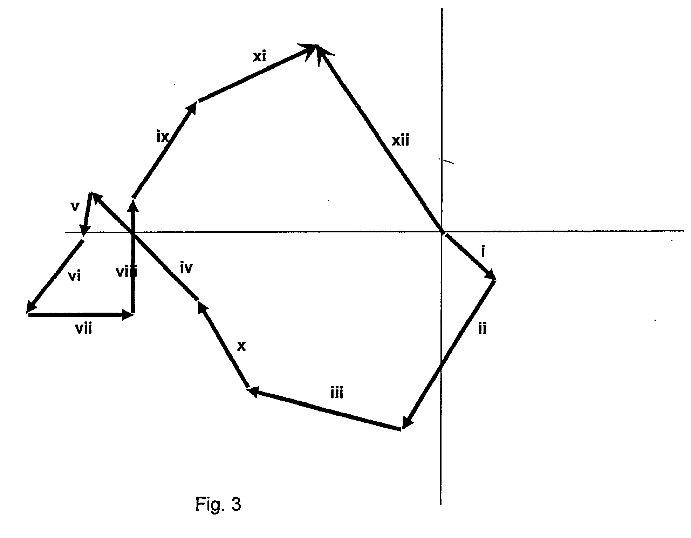

Figure 3 is a vector polar plot showing the contributors to first harmonic of the green tire radial runout when no optimization has been applied. These include the various tooling vectors, product vectors, an intercept vector and the variable magnitude vectors. The tooling vectors are the 1st (ii) and 2nd (iii) stage building drum vectors, the summit building drum vector (iv) and the transfer ring vector (v). The building drums hold the the carcass and summit as the tire is being built, while the transfer ring holds the summit as it is being placed onto the tire carcass. The product vectors are the belt ply vectors (vi and vii), cap vector (viii) and tread vector (ix). The belt ply is the protective steel belt, the cap is a nylon cover that goes over the belt ply and the tread is interface between the tire and the ground. The green tire radial runout is the vector sum of the other components. The remaining, unidentified factors are consolidated in the Intercept vector (i) I1. If all factors were known, then the Intercept vector I1 would not exist. Throughout this disclosure, the Intercept vector I1 accounts for the unidentified effects. A unique attribute of the invention is the ability to optimize the after cure uniformity by manipulation of the tooling and product vectors. The ability to treat these effects in vector space is possible only when each harmonic has been extracted.

The measurement of green tire RRO (xii) is preferably at the completion of tire building and before the green tire is removed from the building drum 15. The Carcass gain vector (x) and Summit gain vector (xi) are also shown in Figs. 3-5. In the preferred method, the measurement drum is the tire building drum 15, whether it is the single drum of a unistage machine or the fmishing drum of a two-stage machine. The green tire RRO measurement may also be performed offline in a dedicated measurement apparatus. In either case, the radial runout of the measurement drum can introduce a false contribution to the Green RRO vector. When the green tire RRO is measured, the result is the sum of true tire runout and the runout of the drum used for measurement of RRO. However, only the green tire RRO has an affect on the after cure RFV of the tire.

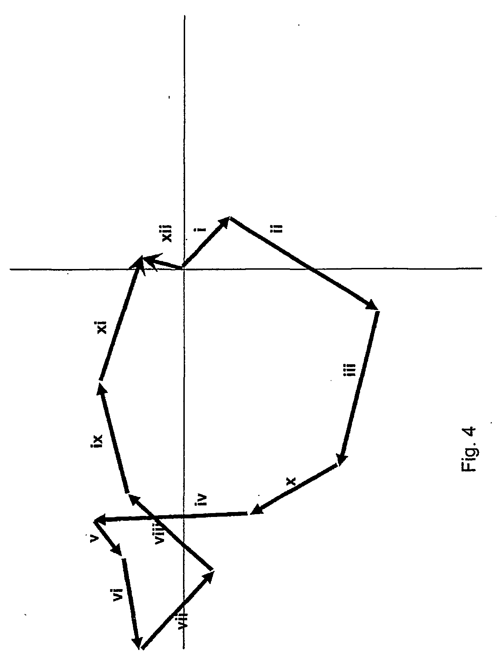

Figure 4 now shows a schematic of the optimization step. In this view the vectors iv-ix have been rotated as a unit to oppose the variable vectors. It is readily apparent that this optimization greatly reduces the green tire radial runout. The steps for performing the optimization are provided below.

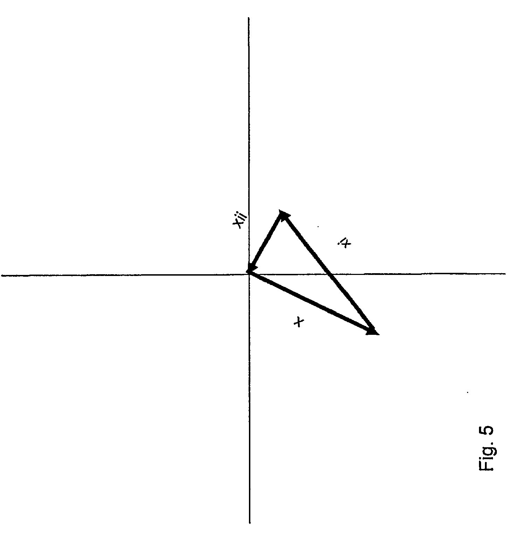

Figure 5 is a vector plot showing the summit radial runout vector as the difference between the measured green tire radial runout vector and the measured carcass radial runout vector. This computation can be used as equivalent to a direct measurement of the summit radial runout vector and obviates the need for taking the measurements for the summit.

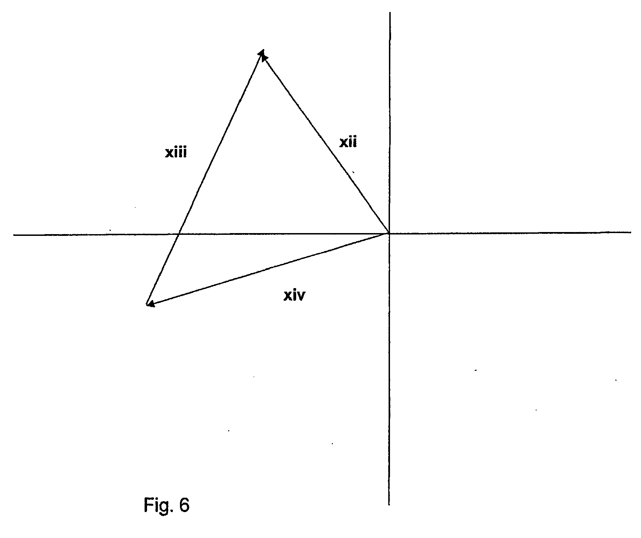

Figure 6 is a vector polar plot showing the grouping of contributors to the first harmonic of the green tire radial runout when no optimization has been applied. Reference number 13 is the resultant vector sum of constant vectors iv through ix and variable vector xi. Reference number 14 is the resultant vector sum of constant vectors i through iii and variable vector xi. Reference number xii is the same green tire radial runout as shown in Figure 3.

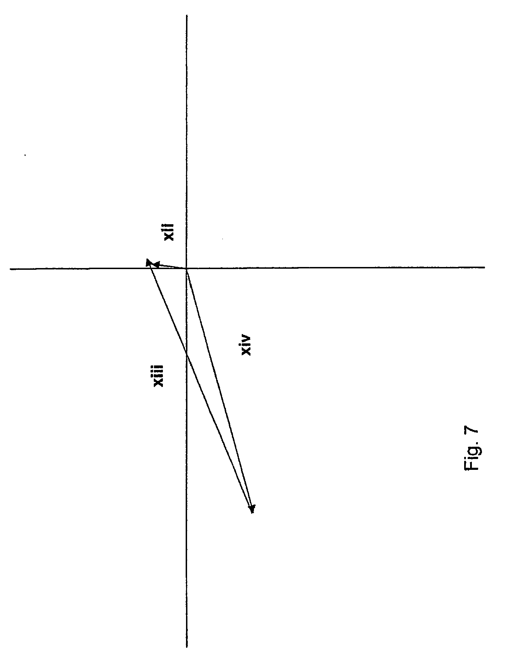

Figure 7 is a vector polar plot showing the grouping of contributors to the first harmonic of the green tire radial runout after optimization has been applied. Reference number 13 is the resultant vector sum of constant vectors iv through ix and variable vector xi. Reference number 14 is the resultant vector sum of constant vectors i through iii and variable vector xi. Reference number xii is the same optimized green tire radial runout as shown in Figure 4.

The sub-vector advantage can also be use to improve the curing room effects. An effect similar to the foregoing false RRO exists for measurement of after cure RFV. That is, the measurement machine itself introduces a contribution to the as-measured tire RFV. Figure 8 depicts an additional sub-vector UM1 to account for this effect showing the difference between the measured radial force vector VRH1 and the true radial force vector TVRH1. This sub-vector imparts a small, but significant correction to the rotation angle CAV_REF shown in Fig. 4 for optimizing VRH1. Studies have shown that the inclusion of the UM1 sub-vector can improve the magnitude VRM1 of the true radial force vector VRH1 by about 0.5 to 1.0 Kg.

The foregoing graphical representations in vector space can now be recast as equation (1) below where each term represents the vectors shown in the example of Fig. 3. The method can be applied to additional effects not depicted in Fig. 3 nor described explicitly herein without departing from the scope of the invention.

$$FRH1 = (FRH1crEffect\ vector) + (FRH1sr\ Effect\ vector) + (1^{st}\ Stage\ Building\ Drum\ RRO\ vector)$$

$$+ (2^{nd}\ Stage\ Building\ Drum\ RRO\ vector) + (Summit\ Building\ Drum\ RRO\ vector) + (Transfer\ Ring$$

$$RRO\ vector) + (Belt1\ Ply\ RRO\ vector) + (Belt2\ Ply\ RRO\ vector) + (Cap\ RRO\ vector) + (Tread$$

$$RRO\ vector) \qquad\qquad (1)$$

The preceding equation applies to modeling the 1st harmonic of radial runout, but holds for other harmonics such as FRH2-FRH5 as well.

The first step in implementation of the method is to gather data to build the modeling equation. The Green RRO and Effect vectors are measured quantities. The challenge is to estimate the gain vectors, the product vectors, the tooling vectors and the intercept vector. This is accomplished by vector rotation and regression analysis.

First, a reference point on the tire, such as a barcode applied to the carcass or a product joint that will be accessible through then entire process is identified. In the specific example described herein, the invention contains an improvement to account for the radial runout of the measurement drum itself. This effect may be significant when the tire building drum 15 is used as the measurement drum. The loading angle of the tire carcass on the measurement drum is recorded. For this specific example, the loading angle is measured as the carcass 10 is loaded on either the first stage of a unistage or a second stage of a two-stage machine. It is advantageous to ensure a wide variation of the loading angle within a given sample of tires to ensure accurate estimation of the effect of the measurement drum runout on the vector coefficients.

Next, the RRO of the finished, green tire 30 is measured by a measurement device 70 while the tire is mounted on the finishing stage building drum 15 and rotated. Alternatively, the finished, green tire may be moved to separate measurement apparatus and the RRO measurement made there. This RRO measurement is repeated for multiple tires to randomize the effects that are not modeled. There are many known devices 70 to obtain the RRO measurement such as a non-contact system using a vision system or a laser. It has been found that systems for measurement of radial runout that are based on tangential imaging are preferred to those using radial imaging. The RRO data thus acquired are recorded in a computer 80.

Once these data have been acquired for a suitable sample of tires, the harmonic data are extracted from the RRO waveforms. In the present invention the first harmonic data of the green radial runout GR1 (magnitude FRM1 and azimuth FRA1), carcass runout (magnitude FRM1cr and azimuth FRA1cr) and summit runout (magnitude FRM1sr and azimuth FRA1sr) respectively are extracted and stored. The following table indicates the specific terminology.

| Vector | Magnitude | Azimuth |
|---|---|---|
| Green RRO (GR1) | FRM1 | FRA1 |
| Carcass Gain (gn) | Gcr | θ |
| Summit Gain (gn) | Gsr | θ |

(continued)

| Vector | Magnitude | Azimuth |
|---|---|---|
| Intercept (I1) | IM1 | IA1 |
| 1st Stage Building Drum | BM1r | BA1r |
| 2nd Stage Building Drum | TM1r | TA1r |
| Transfer Ring | RM1r | RA1r |
| Summit Building Drum | SM1r | SA1r |
| Belt Ply | NM1r | NA1r |
| Cap | BZM1r | BZA1r |
| Tread | KM1r | KA1r |

To facilitate rapid application of equation (1) in a manufacturing environment, it is advantageous to use a digital computer to solve the equation. This requires converting the vector equations above to a set of arithmetic equations in Cartesian coordinates. In Cartesian coordinates, each vector or sub-vector has an x-component and a y-component as shown in the example below:

$$FRH1_X = (FRM1)*COS(FRA1), \text{ and } FRH1_Y = (FRM1)*SIN(FRA1) \qquad (2)$$

The dependent vector ($FRH1r_x$, $FRH1r_y$) is the sum of the vectors in the equations below.

$$
\begin{aligned}
FRH1r_x = \ &Gcr \cdot FRM1cr \cdot COS(\Theta + FRA1cr) &&+ &&(3)\\
&Gsr \cdot FRM1sr \cdot COS(c + FRA1sr) &&+\\
&BM1r \cdot COS(BA1r + CBD\_REF) &&+\\
&TM1r \cdot COS(TA1r + FBD\_REF) &&+\\
&SM1r \cdot COS(SA1r + SBD\_REF) &&+\\
&RM1r \cdot COS(RA1r + TSR\_REF) &&+\\
&NM1r \cdot COS(NA1r + NBD\_REF) &&+\\
&BZM1r \cdot COS(BZA1r + BBD\_REF) &&+\\
&KM1r \cdot COS(KA1r + KBD\_REF) &&+\\
&IM1r \cdot COS(IA1r)
\end{aligned}
$$

$$
\begin{aligned}
FRH1r_y = \ &Gcr \cdot FRM1cr \cdot SIN(\Theta + FRA1cr) &&+ &&(4)\\
&Gsr \cdot FRM1sr \cdot SIN(e + FRA1sr) &&+\\
&BM1r \cdot SIN(BA1r + CBD\_REF) &&+\\
&TM1r \cdot SIN(TA1r + FBD\_REF) &&+\\
&SM1r \cdot SIN(SA1r + SBD\_REF) &&+\\
&RM1r \cdot SIN(RA1r + TSR\_REF) &&+\\
&NM1r \cdot SIN(NA1r + NBD\_REF) &&+\\
&BZM1r \cdot SIN(BZA1r + BBD\_REF) &&+\\
&KM1r \cdot SIN(KA1r + KBD\_REF) &&+\\
&IM1r \cdot SIN(IA1r)
\end{aligned}
$$

Expanding these equations with standard trigonometric identities yields:

$$FRH1r_x = Gcr \cdot COS(\Theta) \cdot FRM1cr \cdot COS(FRA1cr) - Gcr \cdot SIN(\Theta) \cdot FRM1cr \cdot SIN(FRA1cr) +$$
$$Gsr \cdot COS(\theta) \cdot FRM1sr \cdot COS(FRA1sr) - Gsr \cdot SIN(\theta) \cdot FRM1sr \cdot SIN(FRA1sr) +$$
$$BM1r \cdot COS(BA1r) \cdot COS(CBD\_REF) - BM1r \cdot SIN(BA1r) \cdot SIN(CBD\_REF) +$$
$$TM1r \cdot COS(TA1r) \cdot COS(FBD\_REF) - TM1r \cdot SIN(TA1r) \cdot SIN(FBD\_REF) +$$
$$SM1r \cdot COS(SA1r) \cdot COS(SBD\_REF) - SM1r \cdot SIN(SA1r) \cdot SIN(sBD\_REF) +$$
$$RM1r \cdot COS(RA1r) \cdot COS(TSR\_REF) - RM1r \cdot SIN(RA1r) \cdot SIN(TSR\_REF) +$$
$$NM1r \cdot COS(NA1r) \cdot COS(NBD\_REF) - NM1r \cdot SIN(NA1r) \cdot SIN(NBD\_REF) +$$
$$BZM1r \cdot COS(BZA1r) \cdot COS(BBD\_REF) - BZM1r \cdot SIN(BZA1r) \cdot SIN(BBD\_REF) +$$
$$KM1r \cdot COS(KA1r) \cdot COS(KBD\_REF) - KM1r \cdot SIN(KA1r) \cdot SIN(KBD\_REF) +$$
$$IM1r \cdot COS(IA1r)$$

$$FRH1r_y = Gcr \cdot COS(\Theta) \cdot FRM1cr \cdot SIN(FRA1cr) + Gcr \cdot SIN(\Theta) \cdot FRM1cr \cdot COS(FRA1cr) +$$
$$Gsr \cdot COS(\theta) \cdot FRM1sr \cdot SIN(FRA1sr) + Gsr \cdot SIN(\theta) \cdot FRM1sr \cdot COS(FRA1sr) +$$
$$BM1r \cdot COS(BA1r) \cdot SIN(CBD\_REF) + BM1r \cdot SIN(BA1r) \cdot COS(CBD\_REF) +$$
$$TM1r \cdot COS(TA1r) \cdot SIN(FBD\_REF) + TM1r \cdot SIN(TA1r) \cdot COS(FBD\_REF) +$$
$$SM1r \cdot COS(SA1r) \cdot SIN(SBD\_REF) + SM1r \cdot SIN(SA1r) \cdot COS(sBD\_REF) +$$
$$RM1r \cdot COS(RA1r) \cdot SIN(TSR\_REF) + RM1r \cdot SIN(RA1r) \cdot COS(TSR\_REF) +$$
$$NM1r \cdot COS(NA1r) \cdot SIN NBD\_REF) + NM1r \cdot SIN(NA1r) \cdot COS(NBD\_REF) +$$
$$BZM1r \cdot COS(BZA1r) \cdot SIN(BBD\_REF) + BZM1r \cdot SIN(BZA1r) \cdot COS(BBD\_REF) +$$
$$KM1r \cdot COS(KA1r) \cdot SIN(KBD\_REF) + KM1r \cdot SIN(KA1r) \cdot COS(KBD\_REF) +$$
$$IM1r \cdot COS(IA1r)$$

To simplify the expanded equation, convert from polar to Cartesion coordinates and introduce the following identities:

$$a = Gcr \cdot COS(\Theta) \ , \ b = Gcr \cdot SIN(\Theta) \tag{11}$$

$$c = Gsr \cdot COS(\theta) \ , \ d = Gsr \cdot SIN(\theta) \tag{12}$$

$$e = BM1r \cdot COS(BA1r), \ f = BM1r \cdot SIN(BA1r) \tag{13}$$

$$g = TM1r \cdot COS(TA1r), \ h = TM1r \cdot SIN(TA1r) \tag{14}$$

$$i = SM1r \cdot COS(SA1r), \ j = SM1r \cdot SIN(SA1r) \tag{15}$$

$$k = RM1r \cdot COS(RA1r), \ l = RM1r \cdot SIN(RA1r) \tag{16}$$

$$m = NM1r \cdot COS(NA1r), \ n = NM1r \cdot SIN(nA1r) \tag{17}$$

$$o = BZM1r \cdot COS(BZA1r), \ p = BZM1r \cdot SIN(BZA1r) \tag{18}$$

$$q = KM1r \cdot COS(KA1r), \ r = KM1r \cdot SIN(KA1r) \tag{19}$$

Substituting these identities into the expanded form of equations (3) and (4) yields:

$$
\begin{aligned}
FRH1r_x = a \cdot FRM1crx - b \cdot FRM1cry \quad & + \\
c \cdot FRM1srx - d \cdot FRM1sry \quad & + \\
e \cdot CBD\_REFx - f \cdot CBD\_REFy \quad & + \\
\\
g \cdot FBD\_REFx - h \cdot FBD\_REFy \quad & + \\
i \cdot SBD\_REFx - j \cdot SBD\_REFy \quad & + \\
k \cdot TSR\_REFx - l \cdot TSR\_REFy \quad & + \\
m \cdot NBD\_REFx - n \cdot NBD\_REFy \quad & + \\
o \cdot BBD\_REFx - p \cdot BBD\_REFy \quad & + \\
q \cdot KBD\_REFx - r \cdot KBD\_REFy \quad & + \\
Ix &
\end{aligned}
\tag{20}
$$

$$
\begin{aligned}
FRH1r_y = a \cdot FRM1cry + b \cdot FRM1crx \quad & + \\
c \cdot FRM1sry + d \cdot FRM1srx \quad & + \\
e \cdot CBD\_REFy + f \cdot CBD\_REFx \quad & + \\
g \cdot FBD\_REFy + h \cdot FBD\_REFx \quad & + \\
i \cdot SBD\_REFy + j \cdot SBD\_REFx \quad & + \\
k \cdot TSR\_REFy + l \cdot TSR\_REFx \quad & + \\
m \cdot NBD\_REFy + n \cdot NBD\_REFx \quad & + \\
o \cdot BBD\_REFy + p \cdot BBD\_REFx \quad & + \\
q \cdot KBD\_REFy + r \cdot KBD\_REFx \quad & + \\
Iy &
\end{aligned}
\tag{21}
$$

The equations (20) and (21) immediately above can be written in matrix format. When the predictive coefficients vectors **(a,b)**, **(c,d)**, **(e,f)**, **(g,h)**, **(i,j)**, **(k,l)**, **(m,n)**, **(o,p)**, **(q,r)**, and **(I1$_X$,I1$_Y$)** are known, the matrix equation provides a modeling equation by which the VRH1 vector for an individual tire may be estimated. This basic formulation can also be modified to include other process elements and to account for different production organization schemes. These coefficient vectors may be obtained by various known mathematical methods to solve the matrix equation above.

In a manufacturing environment and to facilitate real-time use and updating of the coefficients, the method is more easily implemented if the coefficients are determined simultaneously by a least-squares regression estimate. All coefficients for all building drums and products may be solved for in a single regression step. Finally the vector coefficients are stored in a database for future use. The coefficients have a physical significance as follows: **(a,b)** is the carcass gain vector in units of mm of GTFR, **(c,d)** is the summit gain vector in units of mm of GTFR, **(e,f)** is the first stage building drum vector in units of mm of GTFR, **(g,h)** is the second stage building drum vector in units of mm of GTFR, **(i,j)** is the summit building drum vector in units of mm of GTFR, **(k,l)** is the transfer ring vector in units of mm of GTFR, **(m,n)** is the belt ply vector in units of mm of GTFR, **(o,p)** is the cap vector in units of  mm of GTFR, **(q,r)** is the tread vector in units of mm of GTFR and **(I$_X$, I$_Y$)** is the Intercept vector I1 in units of mm of GTFR.

The equations listed above are for one first stage building drum, one second stage building drum, one summit building drum, etc. The products and tooling factors are nested factors meaning that although the actual process contains many building drums and many products, each tire will see only one of each. Thus the complete equation may include a vector for each building drum and each product.

The final step is to apply the model to optimize the RRO of individual tires as they are manufactured according to the illustration shown in Fig. 4. When subsequent tires are manufactured, the constant vectors are rotated to minimize the green tire RRO. The rotations will be calculated such that when combined with the variable effects coefficients (a, b) and (c,d), it is possible to minimize the estimated vector sum of all the effects. In figures 3 and 4, it is shown that the vectors 4-9 are rotated as a group leading to a considerably smaller resulting green RRO. At this point in the process the summit has been built and is in the transfer ring awaiting positioning on the carcass. Mathematically this means that the constant vectors iv, v, vi, vii, viii and ix and the variable vector xi in figure 4 are combined into one resultant vector. This is shown as reference number xiii in Figures 6 and 7. The carcass has also been built and is sitting inflated on the 2nd stage building drum. Mathematically this means that the constant vectors i, ii and iii and the variable vector x are combined into a second resultant. This is shown as reference number xiv in Figures 6 and 7. We then rotate the first resultant opposite the second resultant. The rotation is achieved by rotating the 2nd stage building drum under the transfer ring in effect positioning the resultant of iv, v, vi, vii, viii, ix and xi opposite the resultant of i, ii, iii and x. Each tire building drum carriers an identification and each tire carries a unique identification device, such as a barcode. These identification tags allow the information recorded for an individual tire to be retrieved and combined at a later step. At the completion of tire building, the green RRO is measured and its harmonic magnitude FRM1 and azimuth FRA1 are recorded along with the loading angle of the tire on the building or measurement drum. A reading device scans the unique barcode to identify the tire, to facilitate polling the database to find the measured and recorded tire information: FRM1 and FRA1, the building drum identification, and the loading angle. Because the variable effects are changing from tire to tire, the rotation of the fixed vectors will change from tire to tire.

Another advantageous and unique feature of the invention is the ability to update the predictive coefficients vectors with the data measured from each individual tire to account for the constant variations associated with a complex manufacturing process. Because the green RRO is continuously measured, the model may be updated at periodic intervals with these new production data so as to adjust the predictive equations for changes in the process. These updates may be appended to the existing data or used to calculate a new, independent set of predictive coefficient vectors which may replace the original data.

It should be understood that the present invention includes various modifications that can be made to the tire manufacturing method described herein as come within the scope of the appended claims.

## Claims

1. A method for reducing before cure radial run out in a tire comprising:

    gathering data to build a model of radial runout of a tire ;
    extracting at least one harmonic of radial runout of said tire;
    deriving a vector equation as a sum of vectors corresponding to the contributors to green-tire radial runout;
    determining a set of vector coefficients from the vector equation;
    building said tire with a predetermined level of green tire radial runout; and
    applying the said vector equation and vector coefficients to future tires,

    **characterized in that** the step of gathering data to build the model comprises:

    recording a carcass building drum identification;
    building a tire carcass (10);
    recording an angle at which the carcass (10) is loaded onto said building drum (15);
    inflating the tire carcass (10) and measuring radial runout measurements of the carcass;
    recording identification for a summit building drum;
    recording an angle at which the summit is loaded onto said summit building drum;
    building a tire summit;
    obtaining a radial runout measurement of the tire summit;
    recording a transfer ring identification;
    transferring the summit from said summit building drum onto the inflated tire carcass;
    recording an angle of the carcass relative to the transfer ring; and
    obtaining measurements of the green tire radial runout.

2. The method for reducing before cure radial run out in a tire according to claim 1, wherein the step of applying the said vector equation and vector coefficients to future tires comprises:

    building the carcass (10) on the first stage building drum;
    loading the carcass (10)on the second stage building drum based at a calculated optimal loading angle;
    inflating the carcass (10);
    measuring the carcass radial runout;
    combining all the vectors obtained from previously built tires; and
    based on said vector sum and the measured carcass radial runout, rotating the summit for optimization.

3. The method for reducing before cure radial run out in a tire according to claim 2, wherein the green tire radial runout is measured after the completion of the tire building and the vector coefficients are updated.

4. The method for reducing before cure radial run out in a tire according to claim 2, wherein the first harmonic of radial runout is extracted.

**5.** The method for reducing before cure radial run out in a tire according to claim 2, wherein the second through fifth harmonics of radial runout is extracted.

**6.** The method for reducing before cure radial run out in a tire according to claim 2, wherein the radial runout measurements are obtained by rotating the building drum (15).

**7.** The method for reducing before cure radial run out in a tire according to claim 2, wherein a set of vector coefficients corresponds to a building drum vector (ii, iii).

**8.** The method for reducing before cure radial run out in a tire according to claim 2, wherein a set of vector coefficients corresponds to a transfer ring vector (v).

**9.** The method for reducing before cure radial run out in a tire according to claim 2, wherein a set of vector coefficients corresponds to a belt ply vector (vi and vii).

**10.** The method for reducing before cure radial run out in a tire according to claim 2, wherein a set of vector coefficients corresponds to a cap vector (viii).

**11.** The method for reducing before cure radial run out in a tire according to claim 2, wherein a set of vector coefficients corresponds to a tread vector (ix).

**12.** The method for reducing before cure radial run out in a tire according to claim 2 wherein determining said vector coefficients for the contributors is performed in a simultaneous step.

**13.** The method for reducing before cure radial run out in a tire according to claim 2, wherein the resulting green tire radial runout comprises the vector sum of tooling vectors (ii - iv), product vectors (vi - vii), tire room effect vectors and an intercept vector (i) which accounts for all further unidentified effects.

**14.** The method for reducing before cure radial run out in a tire according to claim 2, wherein the summit effect radial runout vector is computed as the difference between the green tire radial runout vector and the carcass radial runout vector.

**15.** The method for reducing before cure radial run out in a tire according to claim 1, wherein the predetermined level of green tire radial runout is zero.

**Patentansprüche**

**1.** Verfahren zum Verringern des Radialschlags bei einem Reifen vor dem Vulkanisieren, welches umfasst:

Sammeln von Daten, um ein Modell des Radialschlags eines Reifens zu erstellen;
Extrahieren wenigstens einer Harmonischen des Radial-schlags des Reifens;
Ableiten einer Vektorgleichung als eine Summe von Vektoren, die den zum Radialschlag des Reifenrohlings beitragenden Komponenten entsprechen;
Bestimmen einer Menge von Vektorkoeffizienten aus der Vektorgleichung;
Aufbauen des Reifens mit einer vorbestimmten Größe des Radialschlags des Reifenrohlings; und
Anwenden der Vektorgleichung und der Vektorkoeffizienten auf zukünftige Reifen,
**dadurch gekennzeichnet, dass** der Schritt des Sammelns von Daten, um das Modell zu erstellen, umfasst:

Aufzeichnen einer Karkassenaufbautrommel-Kennung,
Aufbauen einer Reifenkarkasse (10);
Aufzeichnen eines Winkels, unter welchem die Karkasse (10) auf die Aufbautrommel (15) geladen wird;
Aufpumpen der Reifenkarkasse (10) und Messen von Werten des Radialschlags der Karkasse;
Aufzeichnen einer Kennung für eine Kronenaufbautrommel;
Aufzeichnen eines Winkels, unter welchem die Krone auf die Kronenaufbautrommel geladen wird;
Aufbauen einer Reifenkrone;
Gewinnen eines Messwerts des Radialschlags der Reifenkrone;
Aufzeichnen einer Transferring-Kennung;

Transportieren der Krone von der Kronenaufbautrommel auf die aufgepumpte Reifenkarkasse;
Aufzeichnen eines Winkels der Karkasse bezüglich des Transferrings; und
Gewinnen von Messwerten des Radialschlags des Reifenrohlings.

2. Verfahren zum Verringern des Radialschlags bei einem Reifen vor dem Vulkanisieren nach Anspruch 1, wobei der Schritt des Anwendens der Vektorgleichung und der Vektorkoeffizienten auf zukünftige Reifen umfasst:

Aufbauen der Karkasse (10) auf der Aufbautrommel der ersten Stufe;
Laden der Karkasse (10) auf die Aufbautrommel der zweiten Stufe auf der Basis eines berechneten optimalen Ladewinkels;
Aufpumpen der Karkasse (10);
Messen des Radialschlags der Karkasse;
Kombinieren sämtlicher Vektoren, die von vorher aufgebauten Reifen erhalten wurden; und
auf der Basis der Vektorsumme und des gemessenen Radialschlags der Karkasse, Drehen der Krone zwecks Optimierung.

3. Verfahren zum Verringern des Radialschlags bei einem Reifen vor dem Vulkanisieren nach Anspruch 2, wobei der Radialschlag des Reifenrohlings nach Abschluss des Reifenaufbaus gemessen wird und die Vektorkoeffizienten aktualisiert werden.

4. Verfahren zum Verringern des Radialschlags bei einem Reifen vor dem Vulkanisieren nach Anspruch 2, wobei die erste Harmonische des Radialschlags extrahiert wird.

5. Verfahren zum Verringern des Radialschlags bei einem Reifen vor dem Vulkanisieren nach Anspruch 2, wobei die zweite bis fünfte Harmonische des Radialschlags extrahiert werden.

6. Verfahren zum Verringern des Radialschlags bei einem Reifen vor dem Vulkanisieren nach Anspruch 2, wobei die Messwerte des Radialschlags durch Drehen der Aufbautrommel (15) gewonnen werden.

7. Verfahren zum Verringern des Radialschlags bei einem Reifen vor dem Vulkanisieren nach Anspruch 2, wobei ein Satz von Vektorkoeffizienten einem Aufbautrommel-Vektor (ii, iii) entspricht.

8. Verfahren zum Verringern des Radialschlags bei einem Reifen vor dem Vulkanisieren nach Anspruch 2, wobei ein Satz von Vektorkoeffizienten einem Transferring-Vektor (v) entspricht.

9. Verfahren zum Verringern des Radialschlags bei einem Reifen vor dem Vulkanisieren nach Anspruch 2, wobei ein Satz von Vektorkoeffizienten einem Gürtellagen-Vektor (vi und vii) entspricht.

10. Verfahren zum Verringern des Radialschlags bei einem Reifen vor dem Vulkanisieren nach Anspruch 2, wobei ein Satz von Vektorkoeffizienten einem Cap-Vektor (viii) entspricht.

11. Verfahren zum Verringern des Radialschlags bei einem Reifen vor dem Vulkanisieren nach Anspruch 2, wobei ein Satz von Vektorkoeffizienten einem Laufstreifen-Vektor (ix) entspricht.

12. Verfahren zum Verringern des Radialschlags bei einem Reifen vor dem Vulkanisieren nach Anspruch 2, wobei das Bestimmen der Vektorkoeffizienten für die beitragenden Komponenten in einem gleichzeitig stattfindenden Schritt ausgeführt wird.

13. Verfahren zum Verringern des Radialschlags bei einem Reifen vor dem Vulkanisieren nach Anspruch 2, wobei der resultierende Radialschlag des Reifenrohlings die Vektorsumme von Werkzeug-Vektoren (ii-iv), Produkt-Vektoren (vi-vii), Reifenraumeffekt-Vektoren und einem Interzept-Vektor (i), welcher alle weiteren nicht identifizierten Effekte berücksichtigt, umfasst.

14. Verfahren zum Verringern des Radialschlags bei einem Reifen vor dem Vulkanisieren nach Anspruch 2, wobei der Kroneneffekt-Radialschlagvektor als die Differenz zwischen dem Reifenrohlings-Radialschlagvektor und dem Karkassen-Radialschlagvektor berechnet wird.

15. Verfahren zum Verringern des Radialschlags bei einem Reifen vor dem Vulkanisieren nach Anspruch 1, wobei die vorbestimmte Größe des Radialschlags des Reifenrohlings null ist.

**Revendications**

1. Procédé de réduction avant cuisson du voile radial d'un pneu comprenant :

   la collecte de données pour construire un modèle de voile radial d'un pneu ;
   l'extraction d'au moins une harmonique de voile radial dudit pneu ;
   l'obtention d'une équation vectorielle sous la forme d'une somme de vecteurs correspondant aux contributeurs du voile radial du pneu cru ;
   la détermination d'un ensemble de coefficients vectoriels à partir de l'équation vectorielle ;
   la construction dudit pneu avec un niveau prédéterminé de voile radial du pneu cru ; et
   l'application de ladite équation vectorielle et des coefficients vectoriels aux futurs pneus,
   **caractérisé en ce que** l'étape de collecte de données pour construire le modèle comprend :

   l'enregistrement d'une identification de tambour de construction de carcasse ;
   la construction d'une carcasse de pneu (10) ;
   l'enregistrement d'un angle selon lequel la carcasse (10) est chargée sur ledit tambour de construction (15) ;
   le gonflage de la carcasse de pneu (10) et la mesure de mesures de voile radial de la carcasse ;
   l'enregistrement d'une identification pour un tambour de construction de sommet ;
   l'enregistrement d'un angle selon lequel le sommet est chargé sur ledit tambour de construction de sommet ;
   la construction d'un sommet de pneu ;
   l'obtention d'une mesure de voile radial du sommet de pneu ;
   l'enregistrement d'une identification d'anneau de transfert ;
   le transfert du sommet, dudit tambour de construction de sommet sur la carcasse de pneu gonflée ;
   l'enregistrement d'un angle que forme la carcasse par rapport à l'anneau de transfert ; et
   l'obtention de mesures du voile radial du pneu cru.

2. Procédé de réduction avant cuisson du voile radial d'un pneu selon la revendication 1, dans lequel l'étape d'application de ladite équation vectorielle et desdits coefficients vectoriels aux futurs pneus comprend :

   la construction de la carcasse (10) sur le tambour de construction de première étape ;
   le chargement de la carcasse (10) sur le tambour de construction de deuxième étape basé sur un angle de chargement optimal calculé ;
   le gonflage de la carcasse (10) ;
   la mesure du voile radial de carcasse ;
   la combinaison de tous les vecteurs obtenus à partir des pneus précédemment construits ; et
   en se basant sur ladite somme de vecteurs et sur le voile radial de carcasse mesuré, l'optimisation par rotation du sommet.

3. Procédé de réduction avant cuisson du voile radial d'un pneu selon la revendication 2, dans lequel le voile radial du pneu cru est mesuré après achèvement de la construction du pneu et après actualisation des coefficients vectoriels.

4. Procédé de réduction avant cuisson du voile radial d'un pneu selon la revendication 2, dans lequel on extrait la première harmonique du voile radial.

5. Procédé de réduction avant cuisson du voile radial d'un pneu selon la revendication 2, dans lequel on extrait de la deuxième à la cinquième harmoniques du voile radial.

6. Procédé de réduction avant cuisson du voile radial d'un pneu selon la revendication 2, dans lequel les mesures du voile radial sont obtenues par rotation du tambour de construction (15).

7. Procédé de réduction avant cuisson du voile radial d'un pneu selon la revendication 2, dans lequel un ensemble de coefficients vectoriels correspond à un vecteur de tambour de construction (ii, iii).

8. Procédé de réduction avant cuisson du voile radial d'un pneu selon la revendication 2, dans lequel un ensemble de coefficients vectoriels correspond à un vecteur d'anneau de transfert (v).

9. Procédé de réduction avant cuisson du voile radial d'un pneu selon la revendication 2, dans lequel un ensemble de coefficients vectoriels correspond à un vecteur de nappe de ceinture (vi et vii).

10. Procédé de réduction avant cuisson du voile radial d'un pneu selon la revendication 2, dans lequel un ensemble de coefficients vectoriels correspond à un vecteur de chape (viii).

11. Procédé de réduction avant cuisson du voile radial d'un pneu selon la revendication 2, dans lequel un ensemble de coefficients vectoriels correspond à un vecteur de bande de roulement (ix).

12. Procédé de réduction avant cuisson du voile radial d'un pneu selon la revendication 2, dans lequel la détermination desdits coefficients vectoriels pour les contributeurs est réalisée dans une étape simultanée.

13. Procédé de réduction avant cuisson du voile radial d'un pneu selon la revendication 2, dans lequel le voile radial de pneu cru résultant comprend la somme vectorielle de vecteurs de départ d'usinage (ii-iv), de vecteurs de produit (vi-vii), de vecteurs d'effet d'espace de pneu et d'un vecteur d'interception (i) qui prend en compte tous les autres effets non identifiés.

14. Procédé de réduction avant cuisson du voile radial d'un pneu selon la revendication 2, dans lequel le vecteur de voile radial d'effet de sommet est calculé comme étant la différence entre le vecteur de voile radial de pneu cru et le vecteur de voile radial de carcasse.

15. Procédé de réduction avant cuisson du voile radial d'un pneu selon la revendication 1, dans lequel le niveau prédéterminé de voile radial de pneu cru est égal à zéro.

Fig. 1

Fig. 2A

Fig. 2B

Fig. 2C

Fig. 3

EP 1 824 665 B1

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003149542 A1
- EP 1247639 A
- EP 0940665 A
- US 5882452 A
- JP 1145135 A
- JP 6182903 A
- US 6514441 B
- JP 6198203 A
- WO 2005051638 A
- US 5396438 A
- US 2004020583 A
- US 6856929 B